# FASCICULE DE BREVET EUROPEEN

(11) **EP 3 523 855 B1**
(45) Date de publication et mention de la délivrance du brevet: **29.12.2021**
(21) Numéro de dépôt: 17797387.2
(22) Date de dépôt: 10.10.2017
(51) Int. Cl.: H01Q 17/00, H01Q 1/24, H04B 1/3827

(54) **DISPOSITIF MULTIDEPHASEUR D'ONDES ELECTROMAGNETIQUES FONCTIONNANT NOTAMMENT DE MANIERE TRIDIMENSIONNELLE**
MEHRPHASENSCHIEBER FÜR ELEKTROMAGNETISCHE WELLEN, DIE VORNEHMLICH DREIDIMENSIONAL ARBEITEN
MULTIPLE PHASE SHIFTER FOR ELECTROMAGNETIC WAVES OPERATING IN PARTICULAR IN A THREE-DIMENSIONAL MANNER

(30) Priorité: 10.10.2016 FR 1659752
(43) Date de publication de la demande: 14.08.2019
(73) Titulaire: Franco Garcia, Abel, 59250 Halluin (FR)
(72) Inventeur: Franco Garcia, Abel, 59250 Halluin (FR)
(74) Mandataire: Cabinet Bleger-Rhein-Poupon
(86) Numéro de dépôt international: PCT/FR2017/052777
(87) Numéro de publication internationale: WO 2018/069631

(56) Documents cités:
- EP-A1- 1 929 579
- FR-A1- 2 860 106
- GB-A- 2 336 472
- JIUNN-NAN HWANG ET AL: "Reduction of the Peak SAR in the Human Head With Metamaterials", IEEE TRANSACTIONS ON ANTENNAS AND PROPAGATION, IEEE SERVICE CENTER, PISCATAWAY, NJ, US, vol. 54, no. 12, 1 décembre 2006 (2006-12-01), pages 3763-3770, XP011151446, ISSN: 0018-926X, DOI: 10.1109/TAP.2006.886501

## Description

La présente invention a trait à un dispositif multidéphaseur d'ondes électromagnétiques, dont la fonction essentielle est d'agir sur ces ondes pour diminuer ou supprimer leurs effets potentiellement délétères, et par conséquent constituer une protection pour les utilisateurs de l'invention. Les conséquences exactes de ces ondes dans le corps humain ne sont pas connues avec précision, mais leurs effets mesurables sont tels que l'on suppose qu'elles sont susceptibles d'affecter la santé des personnes qui y sont soumises, notamment en cas d'expositions prolongées ou régulières.

Or, les développements technologiques qui sont la signature du monde actuel vont dans le sens d'une multiplication des sources d'ondes électromagnétiques, et d'un accroissement constant des possibilités d'interaction de celles-ci avec le corps, l'exemple le plus emblématique étant évidemment représenté par les téléphones cellulaires.

Cet exemple est cependant loin d'être isolé, et la cohorte des appareils, dispositifs, outils qui émettent des ondes électromagnétiques et qui font partie de l'entourage quotidien plus ou moins proche de l'individu du 21^{ème} siècle ne cesse d'augmenter : ordinateurs, tablettes, boîtiers WIFI, fours à micro-ondes, ampoules basse consommation, antennes relais, télévisions, plaques à injection etc..

Pour mémoire, d'après l'Union Internationale des Télécommunications, sept milliards d'abonnements en téléphonie mobile ont été recensés en 2014 dans le monde, c'est-à-dire sensiblement autant que d'habitants sur notre planète ! C'est un chiffre considérable, à mettre en parallèle avec l'estimation actuelle de 40 milliards d'objets connectés en 2020, lesquels pourront générer un volume de données de plus de 40.000 milliards de Go !

Outre la téléphonie, il est réaliste de penser qu'on va vers une multiplication de tous ces appareillages, et que la question de la gestion de ces ondes en termes de santé publique, ou plutôt en termes de protection, se posera avec de plus en plus d'acuité le temps passant.

Les débats théoriques sont aujourd'hui polarisés sur la question de la nocivité ou de l'innocuité des ondes électromagnétiques, aucune preuve irréfutable ne conduisant les scientifiques à se prononcer dans un sens ou dans l'autre. Pour le moment, personne n'a en effet la capacité de définir le niveau de dangerosité des ondes électromagnétiques, le monde médical étant partagé entre ceux qui estiment qu'un lien de causalité existe entre certains symptômes (migraines vertiges, nausées, insomnies..) et les ondes électromagnétiques, alors que d'autres pensent qu'il ne s'agit que de pures spéculations sans fondements vérifiables.

La réalité est cependant que nous y sommes aujourd'hui soumis en permanence, et que cette situation ne peut que devenir de plus en plus prégnante.

Parmi les indicateurs à disposition, qui tentent d'évaluer l'impact des ondes électromagnétiques, l'indice de débit d'absorption spécifique ou DAS marque la quantité d'énergie véhiculée par les ondes radiofréquences reçues par un utilisateur par exemple de téléphone portable, dans les pires conditions d'utilisation. Cet indice est mesuré en utilisant notamment l'élévation de température dans les tissus. Mais il n'existe pas d'études donnant une évaluation précise du risque, ce qui conduit nombre d'intervenants du domaine à préconiser l'application d'un principe de précaution.

A partir de ces réflexions et constats, le déposant a déjà travaillé sur la question de la protection des individus contre les effets des ondes électromagnétiques, et a notamment protégé les résultats de ses premiers travaux, qui apparaissent par exemple dans le document EP 1 929 579.

Le concept qui est à la base de ces travaux réside dans la génération par les ondes électromagnétiques incidentes d'ondes déphasées qui interfèrent avec les ondes incidentes et annihilent leurs effets. Le dispositif physique développé à cet effet comporte des antennes qui rayonnent lorsqu'elles sont dans le champ électromagnétique, les antennes étant prévues pour que les rayons rayonnés interfèrent pour créer des ondes déphasées par rapport aux ondes incidentes en vue du résultat précité. Des configurations à antennes en boucle sont utilisées pour obtenir *in fine* des rayonnements présentant une valeur de déphasage adéquate.

Le problème est que les configurations montrées dans EP 1 929 579 ne sont plus suffisantes pour faire face à l'accroissement exponentiel de toutes les ondes partout où l'individu se déplace dans l'environnement sociétal actuel, le champ électromagnétique ambiant résultant de sources multiples et en nombre croissant rapidement.

Les configurations présentées sont trop limitées, elles ne répondent qu'imparfaitement aux nouveaux enjeux techniques posés par ce qu'il faut bien appeler l'explosion des sources génératrices de champs électromagnétiques, conduisant à la densification d'un brouillard électromagnétique dans lequel nous baignons en permanence.

La présente invention a pour but de proposer des solutions obéissant à des configurations différentes, bien que basées sur le même principe, et aptes à faire face à ladite densification et à ses effets potentiellement délétères pour l'organisme humain. Elle permet en fait de protéger toutes les personnes qui sont dans l'environnement immédiat du dispositif de l'invention et non plus seulement celles qui en étaient le cas échéant équipées. Il y a donc un effet de distance, c'est-à-dire en particulier une portée bien supérieure à celle des solutions proposées jusqu'ici.

A ces effets, mais également en vue d'obtenir bien d'autres avantages qui seront manifestes à la lecture de la suite du texte, le dispositif multidéphaseur d'ondes électromagnétiques, de l'invention, présente comme c'était déjà connu une pluralité de modules de déphasage comprenant chacun au moins deux boucles homothétiques électriquement isolées l'une de l'autre et reliées entre elles par deux éléments de connexion électrique interboucle distincts au niveau d'une première ouverture dans chacune desdites boucles. Il comporte, également classiquement, des modules de déphasage reliés électriquement à au moins un autre module de déphasage par deux éléments de connexion intermodule reliant électriquement une boucle de chaque module au niveau d'une seconde ouverture.

Selon l'invention, le dispositif va bien au-delà de ce qui était connu jusqu'ici en ce qu'il est tel que les modules de déphasage sont agencés en plusieurs groupes de modules de déphasage, chaque groupe comprenant au moins deux modules de déphasage homothétiques concentriques interconnectés, au moins la boucle extérieure de chaque groupe comprenant des moyens de connexion intergroupe constitués d'au moins une paire d'éléments de connexion intergroupe disposée au niveau d'une ouverture dans ladite boucle.

Les groupes ainsi constitués permettent notamment la réalisation d'un agencement global volumique, c'est-à-dire multidimensionnel, mais ils ont également pour avantage de permettre, grâce à cette configuration particulière en groupes, d'augmenter l'efficacité intrinsèque et la portée du dispositif. Le nombre des antennes et leur disposition permettent d'amplifier considérablement le déphasage et assurent un rayonnement à distance sensiblement supérieur. Compte tenu du nuage dense d'ondes ambiantes, et de la complexité du paysage ondulatoire qui en résulte, l'objectif était de proposer, à partir d'une configuration connue élémentaire, une généralisation configurationnelle qui permette une utilisation bien plus ample et adaptable à des contextes beaucoup plus variés.

Selon une configuration possible, qui optimise encore la configuration de l'invention en relation avec ses objectifs, chaque groupe de modules de déphasage peut comprendre au moins deux sous-groupes de modules de déphasage, chaque sous-groupe étant classiquement constitué de modules interconnectés, avec une alternance régulière de boucles concentriques appartenant successivement à chaque sous-groupe. Dans ce cas, la densité des modules s'accroît encore et l'efficacité globale du dispositif s'en trouve notoirement améliorée.

De préférence, c'est la boucle extérieure de chaque sous-groupe de modules de déphasage qui peut comprendre des éléments de connexion intergroupe. L'interconnexion des différents groupes s'effectue alors à partir de raccordements électriques effectués depuis la périphérie des ensembles de boucles concentriques constituant les modules interconnectés. Lorsque des boucles appartiennent à plusieurs sous-groupes et sont entrelacées, les boucles périphériques de chaque sous-groupe sont impliquées dans la connexion intergroupe.

En pratique, dans un dispositif selon l'invention, chaque groupe est connecté à tous les autres groupes du dispositif. La connexion intergroupe peut cependant être directe, si les boucles extérieures de chaque groupe sont raccordées, ou indirecte si elles passent par une boucle d'un groupe intermédiaire.

Selon une configuration possible, les modules de déphasage de chaque groupe sont constitués de pistes conductrices tracées sur une face isolante d'un boîtier constituant un volume à plusieurs faces. Il s'agit en l'occurrence d'une structure tridimensionnelle qui traite de manière plus complète les ondes électromagnétiques environnantes, et augmente les possibilités de gestion du brouillard d'ondes dont il a été question auparavant.

Selon une possibilité, les pistes formants les boucles sont sensiblement parallèles aux arêtes de séparation des faces, et elles optimisent ainsi la gestion de l'espace des boîtiers formant l'invention.

Dans une telle configuration volumique, de préférence, des moyens de connexion intergroupe sont disposés sur chaque face au même niveau des arêtes de séparation entre deux faces adjacentes dans lesquelles une connexion entre groupes est réalisée. Il y a ainsi possibilité d'une connexion directe de chaque face aux faces qui lui sont directement adjacentes, simplement lorsque l'objet est configuré en trois dimensions.

Les appareils de l'invention ont fait l'objet de tests qui ont montré tout leur potentiel protecteur de la personne dans un environnement chargé en ondes électromagnétiques. Un appareil dénommé MSAS de la société Biomeridian, qui réalise une évaluation non invasive de la santé énergétique des personnes testées, a notamment été utilisé à cet effet. Un tel appareil donne un résultat instantané de la réaction biologique énergétique d'un individu par exemple soumis à des ondes. La différence mesurée est à cet égard extrêmement importante, selon que celui-ci est équipé du dispositif selon l'invention ou non.

Même une capacité de déphasage relativement limitée permet de communiquer une « information » aux cellules, celles du système nerveux en particulier. Cette information «antidote» à destination des cellules permet, via le système nerveux et un mécanisme de bio contrôle qu'il met en oeuvre, d'assurer une bonne protection de l'individu.

Des tests, par exemple avec des téléphones cellulaires, ont été pratiqués sur des sujets des deux sexes d'âges et de poids différents. Quatre types/marques d'appareils téléphoniques portables différents ont de plus été utilisés, de manière à mieux démontrer l'efficacité du dispositif.

A la base, différentes études scientifiques et technologiques ont mis en évidence que les téléphones portables présentent des risques biologiques importants : ils sont à cet égard un bon sujet d'étude pour montrer l'efficacité de l'invention. Du fait de leur puissance intrinsèque et de la proximité avec le corps humain en cours d'utilisation, les ondes pulsées des téléphones portables produisent un rayonnement capable d'augmenter la température des tissus biologiques chez leurs utilisateurs. Le DAS, où « Débit d'Absorption Spécifique » de chaque appareil, auquel on a fait référence auparavant, donne d'ailleurs une indication sur la quantité d'énergie transmise au corps humain.

Quand les ondes électromagnétiques arrivent sur l'organisme, une partie de l'onde est réfléchie tandis que l'autre est absorbée, et l'orientation de la pénétration change à chaque interface rencontrée dans le corps humain, par exemple entre deux tissus différents du corps : peau-muscles, muscles-os, os-vaisseaux, etc...En ce qui concerne la tête, « cible » naturelle pour les téléphones portables, après avoir traversé la peau, les muscles du visage, les os, les ondes électromagnétiques pénètrent à plus de 2 cm à l'intérieur du cerveau.

Une partie de l'énergie électromagnétique absorbée est convertie en chaleur, provoquant une élévation de température du tissu cérébral : la transformation de l'énergie entrant dans les tissus provoque en effet un accroissement d'énergie cinétique des molécules qui absorbent les ondes électromagnétiques. Ceci se traduit par une excitation moléculaire avec une oscillation des molécules bipolaires d'eau et des phospholipides de la membrane, qui constituent la plus grande partie des tissus vivants. Par des analyses thermographiques, on peut mettre en évidence l'action chauffante des champs électromagnétiques (C.E.M) d'un téléphone cellulaire sur le visage. L'analyse des images montre, par rapport au sujet et à la période témoin, une élévation de température significative, principalement dans la région auriculaire et spécialement après 10 minutes de conversation téléphonique.

Les tests sont réalisés par mesures de courant au niveau du majeur de la main gauche du sujet testé, dans un premier temps sans appareil téléphonique, puis avec un appareil non protégé par le système de l'invention, et enfin avec l'appareil protégé.

Le test de mesure du courant effectué sur chaque sujet montre une valeur moyenne de 50 micro-ampères à vide, c'est-à-dire en l'absence de téléphone. En présence de l'appareil, on s'aperçoit que la conductivité baisse significativement. Si un dispositif de déphasage selon l'invention est utilisé, il y a retour significatif à l'équilibre des courants unitaires. La faible variabilité des observations n'a pas nécessité de faire une étude sur de plus grands échantillons.

Parallèlement, des tests de sang ont été effectués, qui montrent aussi l'efficacité du dispositif de l'invention, sous toutes ses formes. On visualise ainsi avec un microscope électronique un échantillon de sang prélevé sur quelqu'un qui n'a pas été exposé aux ondes électromagnétiques : la distribution dans l'espace et l'état des cellules sanguines considérées comme normales sont observées. On répète la même expérience avec un échantillon de sang d'un individu exposé aux ondes électromagnétiques d'un téléphone cellulaire pendant 5 minutes : on observe que les cellules sanguines s'agglomèrent et que leur membrane externe devient floue. On répète encore la même expérience avec une personne bénéficiant d'un dispositif de l'invention, également pendant 5 minutes : les cellules restent presque normales, c'est-à-dire très proches dans leur distribution et leur apparence de celles de la première étape de visualisation.

L'invention va à présent être décrite plus en détail, en référence aux figures annexées, pour lesquelles :
- la figure 1 montre une représentation de plusieurs groupes avec des modules de déphasage comportant des boucles de configuration d'allure carrée, l'un des groupes étant artificiellement agrandi pour que les détails de configuration des boucles et des modules de déphasage d'un groupe soient mieux représentés ;
- la figure 2 représente leur structuration tridimensionnelle en cube ;
- la figure 3 est une version dotée de plusieurs groupes avec des modules de déphasage comportant des boucles de configuration triangulaire ;
- la figure 4 illustre leur structuration volumique en pyramide ;
- la figure 5 montre une configuration plane composée de boucles d'allure circulaire ; et
- la figure 6 en montre une variante avec des sous-groupes entrelacés.

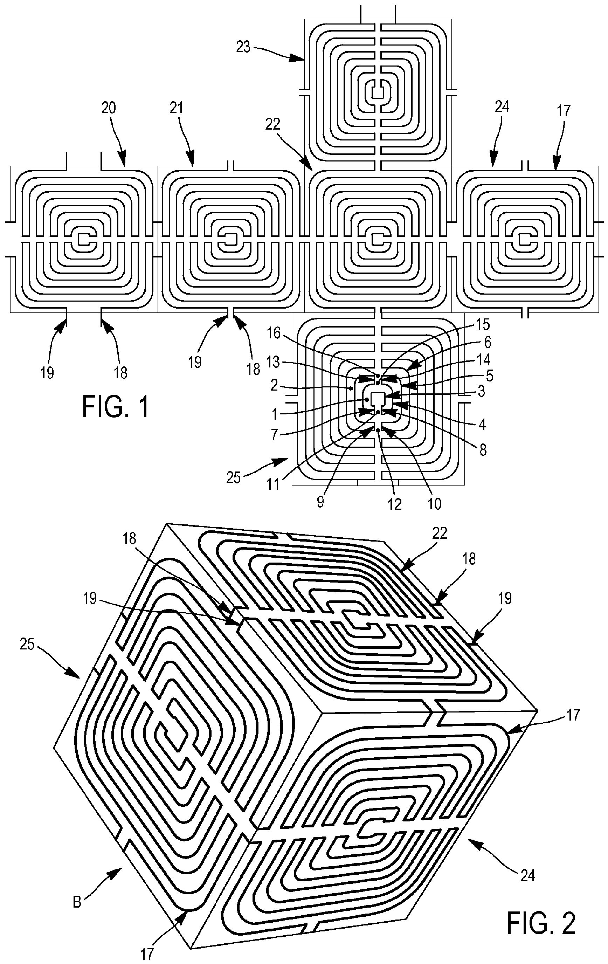

En référence à la figure 1, le dispositif de l'invention dans la forme montrée comprend six groupes 20, 21, 22, 23, 24 et 25, le groupe 25 étant artificiellement agrandi pour mieux en montrer les détails mais présentant en réalité les mêmes dimensions que les autres groupes. Chaque groupe 20, 21, 22, 23, 24 et 25 comporte chacun cinq modules de déphasage dotés chacun de deux boucles. Tous les éléments conducteurs formant les boucles 3, 4, 5, 6 et modules déphaseurs 1, 2 sont constitués de pistes métalliques, par exemple en cuivre ou alliage cuivreux. Les modules 1, 2 et boucles 3, 4, 5, 6 montrés en figure 1 ont une configuration sensiblement carrée. Ces boucles 3, 4, 5, 6 dans les différents modules 1, 2, ainsi que les modules 1, 2 entre eux sont isolés électriquement l'un de l'autre, à l'exception d'éléments de connexion interboucle et intermodule distincts.

Pour simplifier la description, seuls deux modules de déphasage 1, 2 du groupe 20, comportant chacun deux boucles respectivement 3, 4, 5, 6 font l'objet de références numériques, le principe étant ensuite généralisable à d'autres boucles et à d'autres modules. Ainsi, dans le module 1, les deux boucles 3, 4 sont reliées entre elles par les deux éléments de connexion interboucle distincts 7, 8, au niveau d'une première ouverture 11 dans chacune des boucles 3, 4. Puis, dans le module 2, les deux boucles 5, 6 sont reliées entre elles par les deux éléments de connexion distincts 9, 10, au niveau d'une première ouverture 12 dans chacune des boucles 5, 6. Par ailleurs, les deux modules 1, 2 sont reliés par deux éléments de connexion intermodule distincts 13, 14. Chacun de ces éléments de connexion intermodule 13, 14 vient connecter une des boucles 4 du module 1 au niveau d'une deuxième ouverture 15 dans cette boucle 4, à une des boucles 5 de l'autre module 2 au niveau d'une deuxième ouverture 16 dans cette boucle 5.

Les modules et les boucles qui les constituent, par exemple les boucles 3 et 4 du module 1, sont dans le même plan, et sont - dans les configurations présentées - sensiblement homothétiques l'une de l'autre. Ce plan est également celui des autres modules de déphasage, et en particulier du module 2 et de ses boucles 5 et 6 qui sont elles aussi sensiblement homothétiques l'une de l'autre. C'est enfin le plan des autres groupes 21 à 25, au moins dans la configuration préparatoire illustrée en figure 1, avant structuration volumique tridimensionnelle telle qu'elle apparaît en figure 2. Toutes les boucles présentent une identité homothétique dans le plan des groupes, aboutissant à générer des courants électriques de sens inverse dans deux boucles contigües, générant à leur tour des champs électromagnétiques en opposition.

Les connexions intergroupes s'effectuent au niveau de la boucle extérieure 17 de chaque groupe 20 à 25, sous la forme de deux éléments de connexion 18, 19 intergroupe. Ceux-ci sont présents sur tous les côtés de ladite boucle extérieure 17, afin de réaliser une liaison conductrice avec tous les groupes adjacents dans la structure tridimensionnelle projetée, un boîtier (B) en forme de cube, qui est montrée en figure 2.

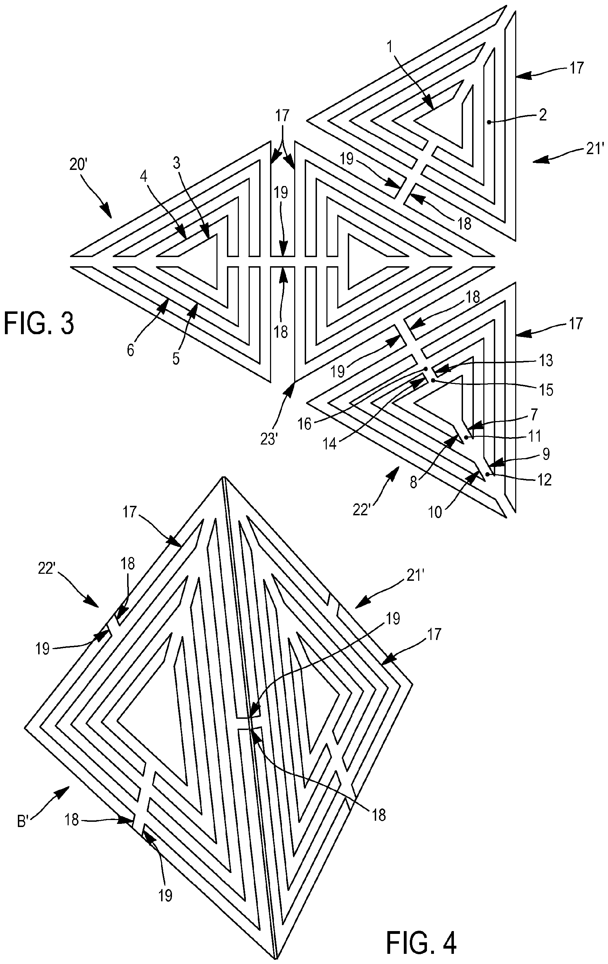

La configuration suivante, basée sur des triangles structurés ensuite volumiquement en une pyramide, est montrée aux figures 3 et 4. Elle obéit à la même logique de base, c'est-à-dire deux boucles homothétiques formant un module de déphasage, puis des modules de déphasage imbriqués l'un dans l'autre pour former un groupe dont la délimitation, également triangulaire, est réalisée par la boule extérieure 17, laquelle est munie de deux éléments de connexion intergroupe 18, 19. Les groupes 20', 21', 22', 23' sont ici au nombre de quatre, correspondant aux quatre faces de la pyramide constituant le volume correspondant, telle qu'elle apparaît en figure 4.

Chaque groupe est en l'occurrence placé sur la face triangulaire du boîtier (B') de la pyramide tridimensionnelle de la figure 4. Il est à noter qu'il n'est nullement indispensable que les groupes soient systématiquement reliés aux groupes des faces adjacentes, la connexion peut se faire indirectement, les groupes de certaines des faces (de trois faces dans l'exemple de la pyramide) étant alors par exemple reliés au groupe d'une seule et même face de la pyramide.

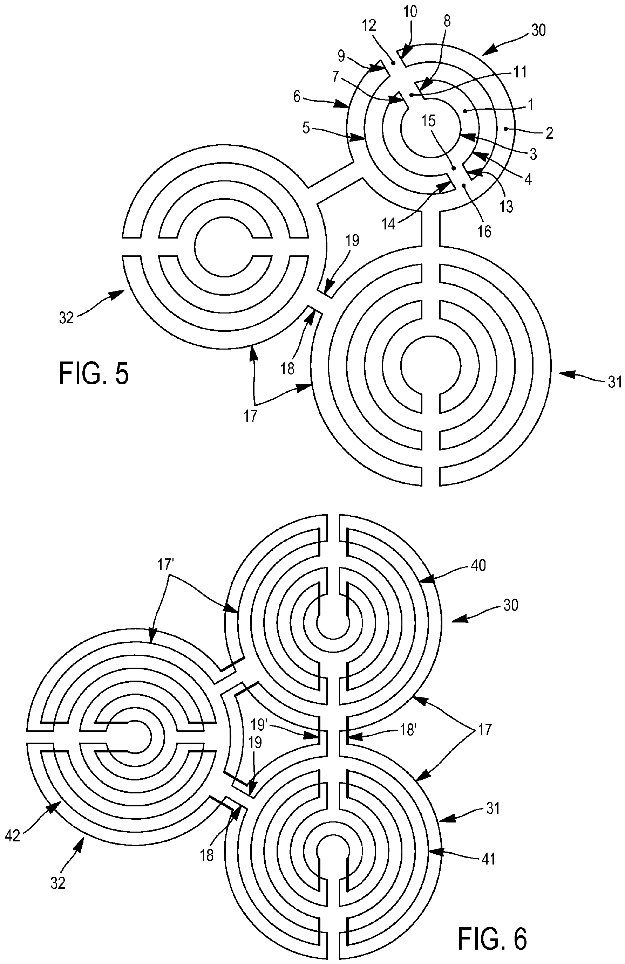

Les mêmes boucles homothétiques constituant des modules de déphasage imbriqués, associés en des groupes 30, 31, 32 reliés, apparaissent dans les figures 5 et 6, montrant un autre aspect de la richesse structurelle de l'invention : ainsi, en figure 5, les groupes 30, 31, 32 sont disparates en ce sens qu'ils ne comportent pas le même nombre de modules de déphasage.

Dans la variante de la figure 6, chaque groupe comporte deux sous-groupes 30, 31, 32 et 40, 41, 42 entrelacés, et les connexions intergroupes s'effectuent alors à partir des boucles 17, 17' extérieures de chaque sous-groupe : les deux boucles extérieures 17, 17' comportent ensemble quatre éléments de connexion 18, 19, 18', 19', comme cela est visible sur la figure.

Les exemples illustrés dans les figures ne sont pas exhaustifs de l'invention, qui englobe au contraire toutes les variantes et configurations de formes géométriques, par exemple polygonales, différentes. De même, des associations de caractéristiques apparaissant dans ces figures peuvent être réalisées : utilisation de sous-groupes dans au moins certains groupes, groupes avec des nombres de modules de déphasage différents.

## Revendications

1. Dispositif multidéphaseur d'ondes électromagnétiques, présentant une pluralité de modules (1, 2) de déphasage comprenant chacun au moins deux boucles (3, 4, 5, 6) homothétiques électriquement isolées l'une de l'autre et reliées entre elles par deux éléments de connexion électrique (7, 8, 9, 10) interboucle distincts au niveau d'une première ouverture (11, 12) dans chacune desdites boucles (3, 4, 5, 6), chacun desdits modules de déphasage (1, 2) étant relié électriquement à au moins un autre desdits modules (2, 1) déphasage par deux éléments de connexion (13, 14) intermodule reliant électriquement une boucle (4, 5) de chaque module (1, 2) au niveau d'une seconde ouverture (15, 16), **caractérisé en ce que** les modules de déphasage (1, 2) sont agencés en plusieurs groupes (20, 21, 22, 23, 24, 25 ; 20', 21', 22', 23' ; 30, 31, 32, 40, 41, 42) de modules de déphasage (1, 2), chaque groupe (20, 21, 22, 23, 24, 25 ; 20', 21', 22', 23' ; 30, 31, 32, 40, 41, 42) comprenant au moins deux modules de déphasage (1, 2) homothétiques concentriques interconnectés, au moins la boucle extérieure (17) de chaque groupe comprenant des moyens de connexion intergroupe constitués d'au moins une paire d'éléments de connexion (18, 19 ; 18' , 19') intergroupe disposée au niveau d'une ouverture dans ladite boucle (17).

2. Dispositif multidéphaseur d'ondes électromagnétiques selon la revendication précédente, **caractérisé en ce que** chaque groupe de modules de déphasage (1, 2) comprend au moins deux sous-groupes (30, 31, 32, 40, 41, 42) de modules de déphasage (1, 2), chaque sous-groupe (30, 31, 32, 40, 41, 42) étant constitué de modules interconnectés, avec une alternance régulière de boucles concentriques appartenant successivement à chaque sous-groupe (30, 31, 32, 40, 41, 42).

3. Dispositif multidéphaseur d'ondes électromagnétiques selon la revendication précédente, **caractérisé en ce que** la boucle extérieure (17, 17') de chaque sous-groupe (30, 31, 32, 40, 41, 42) de modules de déphasage comprend des éléments de connexion (18, 19 ; 18', 19') intergroupe.

4. Dispositif multidéphaseur d'ondes électromagnétiques selon l'une des revendications précédentes, **caractérisé en ce que** chaque groupe (20, 21, 22, 23, 24, 25 ; 20', 21', 22', 23' ; 30, 31, 32, 40, 41, 42) est connecté à tous les autres groupes (20, 21, 22, 23, 24, 25 ; 20', 21', 22', 23' ; 30, 31, 32, 40, 41, 42) du dispositif.

5. Dispositif multidéphaseur d'ondes électromagnétiques selon l'une des revendications précédentes, **caractérisé en ce que** les modules de déphasage (1, 2) de chaque groupe (20, 21, 22, 23, 24, 25 ; 20', 21', 22', 23' ; 30, 31, 32, 40, 41, 42) sont constitués de pistes conductrices configurées pour être tracées sur une face isolante d'un boîtier (B, B') constituant un volume à plusieurs faces.

6. Dispositif multidéphaseur d'ondes électromagnétiques selon la revendication précédente, **caractérisé en ce que** les pistes formants les boucles (20, 21, 22, 23, 24, 25 ; 20', 21', 22', 23' ; 30, 31, 32, 40, 41, 42) sont sensiblement parallèles aux arêtes de séparation des faces.

7. Dispositif multidéphaseur d'ondes électromagnétiques selon l'une des revendications 5 et 6, **caractérisé en ce que** des moyens de connexion (18, 19) intergroupe sont disposés sur chaque face au même niveau des arêtes de séparation entre deux faces adjacentes dans lesquelles une connexion entre groupes (20, 21, 22, 23, 24, 25 ; 20', 21', 22', 23' ; 30, 31, 32, 40, 41, 42) est réalisée.

## Patentansprüche

1. Mehrfach-Phasenschiebervorrichtung für elektromagnetische Wellen, die mehrere Phasenverschiebungsmodule (1, 2) aufweisen, die jeweils wenigstens zwei homothetische Schleifen (3, 4, 5, 6) umfassen, die elektrisch voneinander getrennt und durch zwei separate Elemente zur elektrischen Verbindung (7, 8, 9, 10) zwischen Schleifen im Bereich einer ersten Öffnung (11, 12) in jeder der Schleifen (3, 4, 5, 6) miteinander verbunden sind, wobei jedes der Phasenverschiebungsmodule (1, 2) mit wenigstens einem anderen der Phasenverschiebungsmodule (2, 1) durch zwei Elemente zur Verbindung (13, 14) zwischen Modulen elektrisch verbunden ist, die eine Schleife (4, 5) jedes Moduls (1, 2) im Bereich einer zweiten Öffnung (15, 16) elektrisch verbinden, **dadurch gekennzeichnet, dass** die Phasenverschiebungsmodule (1, 2) in mehreren Gruppen (20, 21, 22, 23, 24, 25; 20', 21', 22', 23'; 30, 31, 32, 40, 41, 42) von Phasenverschiebungsmodulen (1, 2) angeordnet sind, wobei jede Gruppe (20, 21, 22, 23, 24, 25; 20', 21', 22', 23'; 30, 31, 32, 40, 41, 42) wenigstens zwei homothetische konzentrische miteinander verbundene Phasenschiebungsmodule (1, 2) umfasst, wobei wenigstens die äußere Schleife (17) jeder Gruppe Mittel zur Verbindung zwischen Gruppen umfasst, die aus wenigstens einem Paar von Elementen zur Verbindung (18, 19; 18', 19') zwischen Gruppen bestehen, die in einem Bereich einer Öffnung in der Schleife (17) angeordnet sind.

2. Mehrfach-Phasenschiebervorrichtung für elektromagnetische Wellen nach dem vorhergehenden Anspruch, **dadurch gekennzeichnet, dass** jede Gruppe von Phasenverschiebungsmodulen (1, 2) wenigstens zwei Untergruppen (30, 31, 32, 40, 41, 42) von Phasenverschiebungsmodulen (1, 2) umfasst, wobei jede Untergruppe (30, 31, 32, 40, 41, 42) aus miteinander verbundenen Modulen besteht, wobei sich konzentrische Schleifen, die nacheinander zu jeder Untergruppe (30, 31, 32, 40, 41, 42) gehören, regelmäßig abwechseln.

3. Mehrfach-Phasenschiebervorrichtung für elektromagnetische Wellen nach dem vorhergehenden Anspruch, **dadurch gekennzeichnet, dass** die äußere Schleife (17, 17') jeder Untergruppe (30, 31, 32, 40, 41, 42) von Phasenverschiebungsmodulen Elemente zur Verbindung (18, 19; 18', 19') zwischen Gruppen umfasst.

4. Mehrfach-Phasenschiebervorrichtung für elektromagnetische Wellen nach einem der vorhergehenden Ansprüche, **dadurch gekennzeichnet, dass** jede Gruppe (20, 21, 22, 23, 24, 25; 20', 21', 22', 23'; 30, 31, 32, 40, 41, 42) mit all den anderen Gruppen (20, 21, 22, 23, 24, 25; 20', 21', 22', 23'; 30, 31, 32, 40, 41, 42) der Vorrichtung verbunden ist.

5. Mehrfach-Phasenschiebervorrichtung für elektromagnetische Wellen nach einem der vorhergehenden Ansprüche, **dadurch gekennzeichnet, dass** die Phasenverschiebungsmodule (1, 2) jeder Gruppe (20, 21, 22, 23, 24, 25; 20', 21', 22', 23'; 30, 31, 32, 40, 41, 42) aus Leiterbahnen bestehen, die konfiguriert sind, um auf einer isolierenden Fläche eines Gehäuses (B, B'), das ein Volumen mit mehreren Flächen bildet, aufgebracht zu werden.

6. Mehrfach-Phasenschiebervorrichtung für elektromagnetische Wellen nach dem vorhergehenden Anspruch, **dadurch gekennzeichnet, dass** die die Bahnen Schleifen (20, 21, 22, 23, 24, 25; 20', 21', 22', 23'; 30, 31, 32, 40, 41, 42) bilden, die im Wesentlichen parallel zu den Trennkanten der Flächen sind.

7. Mehrfach-Phasenschiebervorrichtung für elektromagnetische Wellen nach einem der Ansprüche 5 und 6, **dadurch gekennzeichnet, dass** zwischen zwei benachbarten Flächen auf jeder Fläche auf gleicher Höhe der Trennkanten Mittel zu Verbindung (18, 19) zwischen Gruppen angeordnet sind, durch die eine Verbindung zwischen Gruppen (20, 21, 22, 23, 24, 25; 20', 21', 22', 23'; 30, 31, 32, 40, 41, 42) erfolgt.

## Claims

1. Multiphase shifter device for electromagnetic waves, having a plurality of phase-shift modules (1, 2) each comprising at least two homothetic loops (3, 4, 5, 6) which are electrically insulated from one another and connected to one another by two separate inter-loop electrical connection elements (7, 8, 9, 10) at a first opening (11, 12) in each of said loops (3, 4, 5, 6), each of said phase-shift modules (1, 2) being electrically connected to at least one other of said phase-shift modules (2, 1) by two intermodule connection elements (13, 14) which electrically connect a loop (4, 5) of each module (1, 2) at a second opening (15, 16), **characterized in that** the phase-shift modules (1, 2) are arranged in a plurality of groups (20, 21, 22, 23, 24, 25; 20', 21', 22', 23'; 30, 31, 32, 40, 41, 42) of phase-shift modules (1, 2), each group (20, 21, 22, 23, 24, 25; 20', 21', 22', 23'; 30, 31, 32, 40, 41, 42) comprising at least two interconnected concentric homothetic phase-shift modules (1, 2), at least the outer loop (17) of each group comprising intergroup connection means consisting of at least one pair of intergroup connection elements (18, 19; 18', 19') arranged at an opening in said loop (17).

2. Multiphase shifter device for electromagnetic waves according to the preceding claim, **characterized in that** each group of phase-shift modules (1, 2) comprises at least two subgroups (30, 31, 32, 40, 41, 42) of phase-shift modules (1, 2), each subgroup (30, 31, 32, 40, 41, 42) consisting of interconnected modules, with concentric loops that belong successively to each subgroup (30, 31, 32, 40, 41, 42) alternating regularly.

3. Multiphase shifter device for electromagnetic waves according to the preceding claim, **characterized in that** the outer loop (17, 17') of each subgroup (30, 31, 32, 40, 41, 42) of phase-shift modules comprises intergroup connection elements (18, 19; 18', 19').

4. Multiphase shifter device for electromagnetic waves according to any of the preceding claims, **characterized in that** each group (20, 21, 22, 23, 24, 25; 20', 21', 22', 23'; 30, 31, 32, 40, 41, 42) is connected to all of the other groups (20, 21, 22, 23, 24, 25; 20', 21', 22', 23'; 30, 31, 32, 40, 41, 42) of the device.

5. Multiphase shifter device for electromagnetic waves according to any of the preceding claims, **characterized in that** the phase-shift modules (1, 2) of each group (20, 21, 22, 23, 24, 25; 20', 21', 22', 23'; 30, 31, 32, 40, 41, 42) consist of conductive tracks designed to be marked on an insulating face of a housing (B, B') which forms a volume having a plurality of faces.

6. Multiphase shifter device for electromagnetic waves according to the preceding claim, **characterized in that** the tracks forming the loops (20, 21, 22, 23, 24, 25; 20', 21', 22', 23'; 30, 31, 32, 40, 41, 42) are substantially parallel to the separating edges of the faces.

7. Multiphase shifter device for electromagnetic waves according to either claim 5 or claim 6, **characterized in that** the intergroup connection means (18, 19) are arranged on each face at the same level as the separating edges between two adjacent faces in which a connection between groups (20, 21, 22, 23, 24, 25; 20', 21', 22', 23'; 30, 31, 32, 40, 41, 42) is produced.
